# EUROPÄISCHE PATENTANMELDUNG

(11) **EP 0 903 376 A2**
(43) Veröffentlichungstag der Anmeldung: **24.03.1999**
(21) Anmeldenummer: 98117751.2
(22) Anmeldetag: 18.09.1998
(51) Int. Cl.: C08L 71/12, C08L 81/02

(54) **Polyarylenether und Polyarylensulfide enthaltende Formmassen mit verbesserter Kerbschlagzähigkeit**

(30) Priorität: 19.09.1997 DE 19741467
(71) Anmelder: BASF AKTIENGESELLSCHAFT, 67056 Ludwigshafen (DE)
(72) Erfinder: Weber, Martin Dr., 67487 Maikammer (DE); Elbl-Weiser, Karin Dr., 69198 Schriesheim (DE)
(74) Vertreter: Isenbruck, Günter, Dr.

(57) **Zusammenfassung**

Die Formmasse enthält, bezogen auf das Gesamtgewicht der Komponenten A bis D und gegebenenfalls E, das insgesamt 100 Gew.-% ergibt,
a: 5 bis 94 Gew.-% mindestens eines Polyarylenethers als Komponente A,
b: 4 bis 93 Gew.-% mindestens eines Polyarylensulfids als Komponente B
c: 1 bis 20 Gew.-% mindestens eines Carboxylgruppen enthaltenden Polyarylenethers als Komponente C,
d: 1 bis 20 Gew.-% mindestens eines schlagzähmodifizierenden Kautschuks, der gegenüber Carboxylgruppen reaktionsfähige funktionelle Gruppen aufweist, als Komponente D,
e: 0 bis 50 Gew.-% weiterer Zusatzstoffe als Komponente E.

## Beschreibung

Die Erfindung betrifft Polyarylenether und Polyarylensulfide enthaltende thermoplastische Formmassen mit verbesserter Kerbschlagzähigkeit.

Poylarylenether sind hochtemperaturbeständige Werkstoffe, die sich insbesondere durch gute thermische Beständigkeit, gute mechanische Eigenschaften und gute Dimensionsstabilität auszeichnen. Für viele Anwendungen sind jedoch die Verarbeitungseigenschaften für Polyarylenether, insbesondere die Fließfähigkeit, nicht ausreichend. Weiterhin wird der Anwendungsbereich der Polyarylenether auch durch die geringe Chemikalienbeständigkeit und Kerbschlagempfindlichkeit begrenzt.

Durch Herstellung von Polyarylenether enthaltenden Polymerblends wurde versucht, diese Nachteile einzuschränken.

In der US 4,021,596 sind thermoplastische Polymerblends beschrieben, die Polyphenylensulfid und Polysulfon enthalten. Die Blends sollen gegenüber Polyarylensulfid verbesserte physikalische Eigenschaften aufweisen.

Blends aus Polysulfon und Polyphenylensulfid sind jedoch unverträglich und zeigen Phasenseparation. Aus diesen Grund wurde der Einsatz von Verträglichkeitsvermittlern vorgeschlagen.

In der US 4,678,831 wird ein Blockcopolymer vorgeschlagen, das einen Polyphenylensulfidanteil und einen Polysulfonanteil aufweist. Es wird in Blends von Polyphenylensulfid und Polysulfon eingesetzt. Die Synthese der Blockpolymere ist jedoch sehr aufwendig und kostspielig. Zudem zeigen die Polymerblends eine verminderte Fließfähigkeit.

In der JP-A-1299872 (1989) ist ein Blend aus Polyphenylensulfid und Polysulfon beschrieben, wobei das aromatische Polysulfon terminale Hydroxylgruppen oder Alkalimetall-Phenolatgruppen aufweist. Der Blend soll verbesserte mechanische Eigenschaften aufweisen.

In der DE-A-44 20 643 sind Polymerblends aus Polyarylenethern mit Hydroxyendgruppen, Polyarylenethern mit Endgruppen, die keine Hydroxygruppen sind, Polyarylensulfiden und faser- oder teilchenförmigen Füllstoffen beschrieben. Sie können zudem schlagzähmodifizierende Kautschuke aufweisen. Die Formmassen sollen verbesserte mechanische Eigenschaften, eine verbesserte Chemikalienbeständigkeit und ein verbessertes thermoplastisches Verarbeitungsverhalten aufweisen.

Die bekannten Polymerblends weisen nicht bei allen Anwendungen eine ausreichend hohe Kerbschlagzähigkeit bei gleichzeitig guter Fließfähigkeit und Verarbeitungsstabilität auf. Zudem ist die Kriechstromfestigkeit teilweise unzureichend.

Aufgabe der vorliegenden Erfindung ist die Bereitstellung von thermoplastischen Formmassen, die Polyarylenether und Polyarylensulfide enthalten und die Nachteile der bekannten Formmassen vermeiden.

Die Aufgabe wird erfindungsgemäß gelöst durch Bereitstellung einer thermoplastischen Formmasse, enthaltend, bezogen auf das Gesamtgewicht der Komponenten A bis D und gegebenenfalls E, das insgesamt 100 Gew.-% ergibt,
a: 5 bis 94 Gew.- % mindestens eines Polyarylenethers als Komponente A,
b: 4 bis 93 Gew.-% mindestens eines Polyarylensulfids als Komponente B,
c: 1 bis 20 Gew.-% mindestens eines Carboxylgruppen enthaltenden Polyarylenethers als Komponente C,
d: 1 bis 20 Gew.-% mindestens eines schlagzähmodifizierenden Kautschuks, der gegenüber Carboxylgruppen reaktionsfähige funktionelle Gruppen aufweist, als Komponente D,
e: 0 bis 50 Gew.-% weiterer Zusatzstoffe als Komponente E.

Es wurde gefunden, daß durch Zusatz reaktiver Kautschuke zu Mischungen aus Polyarylenethern, Polyarylensulfiden und Carboxylgruppen enthaltenden Polyarylenethern die Kerbschlagzähigkeit der Formmassen und Formkörper daraus verbessert werden kann, ohne daß die Fließfähigkeit und die Verarbeitungsstabilität der Formmassen beeinträchtigt wird. Auch die Kriechstromfestigkeit ist verbessert.

Die so erhaltenen Formmassen können zur Herstellung von Fasern, Folien oder Formkörpern verwendet werden. Die Herstellung kann dabei beispielsweise durch Extrudieren, Extrusionsblasen oder Spritzgießen erfolgen. Beispiele geeigneter Formkörper sind Haushaltsartikel, Teile von elektronischen Bauteilen und Bauteile medizinisch-technischer Geräte.

Nachstehend werden zunächst die Komponenten der erfindungsgemäßen Formmassen beschrieben.

### Komponente A

Die erfindungsgemäßen Formmassen enthalten als Komponente A 5 bis 94, bevorzugt 7 bis 87 Gew.-% Polyarylenether. Insbesondere sind die Polyarylenether A in Mengen von 50 bis 85 Gew.-% in den erfindungsgemäßen Formmassen enthalten.

Als Komponente A werden Polyarylenether mit wiederkehrenden Einheiten der allgemeinen Formel (I) 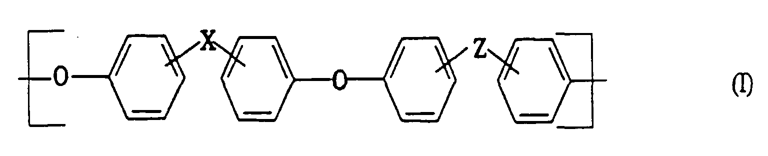 eingesetzt. Ebenso können deren kernsubstituierte Derivate verwendet werden. Als Substituenten kommen vorzugsweise C₁₋₆-Alkyl, wie Methyl, Ethyl, n-Propyl, i-Propyl, n-Butyl, i-Butyl oder t-Butyl, C₁₋₆-Alkoxy wie Methoxy oder Ethoxy, Aryl, insbesondere Phenyl, Chlor oder Fluor in Betracht. Die Variable X kann -SO₂-, -SO-, -O-, -CO-, -N=N-, RC=CR^{a}-, -CR^{b}R^{c}- oder eine chemische Bindung sein. Die Variable Z kann für -SO₂-, -SO-, - N=N- oder -RC =CR^{a}-, stehen. Hierbei stellen R und R^{a} jeweils Wasserstoff, C₁₋₆-Alkyl, z.B. Methyl, Ethyl, n-Propyl i-Propyl oder n-Hexyl, C₁₋₆-Alkoxy, darunter Methoxy, Ethoxy, n-Propoxy, i-Propoxy, oder n-Butoxy, oder Aryl, insbesondere Phenyl dar. Die Reste R^{b} und R^{c} können jeweils Wasserstoff oder eine C₁₋₆-Alkylgruppe, inbesondere Methyl, darstellen. Sie können aber auch zu einem C₄₋₁₀-Cycloalkylring wie Cyclopentyl- oder Cyclohexyl miteinander verknüpft sein, der seinerseits mit einer oder mehreren Alkylgruppen, vorzugsweise Methyl, substituiert sein kann. Daneben können R^{b} und R^{c} auch eine C₁₋₆-Alkoxygruppe, z.B. Methoxy oder Ethoxy oder eine Arylgruppe, insbesondere Phenyl, darstellen. Die vorgenannten Gruppen können ihrerseits jeweils mit Chlor oder Fluor substituiert sein. Die Polyarylenether können vollständig aus den wiederkehrenden Einheiten der allgemeinen Formel (I) aufgebaut sein.

Die Molekulargewichte (Zahlenmittel Mₙ) geeigneter Polyarylenether A liegen im allgemeinen im Bereich von 1500 bis 60 000 g/mol.

Zu den geeigneten Polyarylenethern A zählen auch Copolymere, aufgebaut aus Polyarylenethersegmenten und Struktureinheiten, ausgewählt aus der Gruppe der Polyester, aromatischen Polycarbonate, Polyestercarbonate, Polysiloxane, Polyimide, Polyamidimide und Polyetherimide. Die Molekulargewichte M_{w} der Polyaryletherblöcke bzw. der Polyaryletherpfropfarme in derartigen Copolymeren liegen im allgemeinen im Bereich von 1000-30 000 g/mol. Die Blöcke unterschiedlicher Struktur können in den Copolymeren alternierend oder statistisch angeordnet sein. Der Gewichtsanteil der Polyarylenether in den Copolymeren beträgt im allgemeinen 3 bis 97, vorzugsweise 10 bis 90 und insbesondere 20 bis 80 Gew.-%.

Es können auch Mischungen verschiedener Polyarylenether A verwendet werden.

Einige geeignete wiederkehrende Einheiten sind zusätzlich zu den Weiter unten angegebenen bevorzugten Strukturen der Formeln (II) und (III) im folgenden aufgeführt:

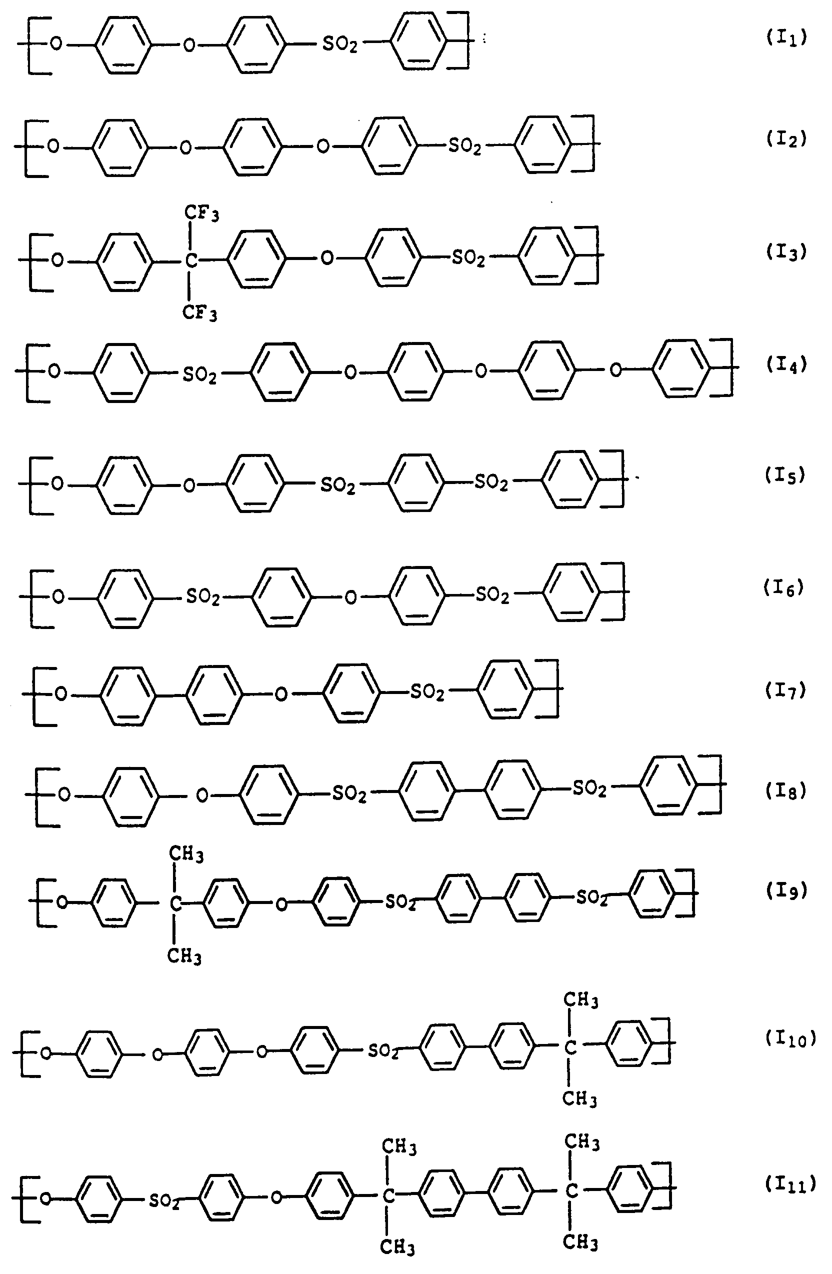

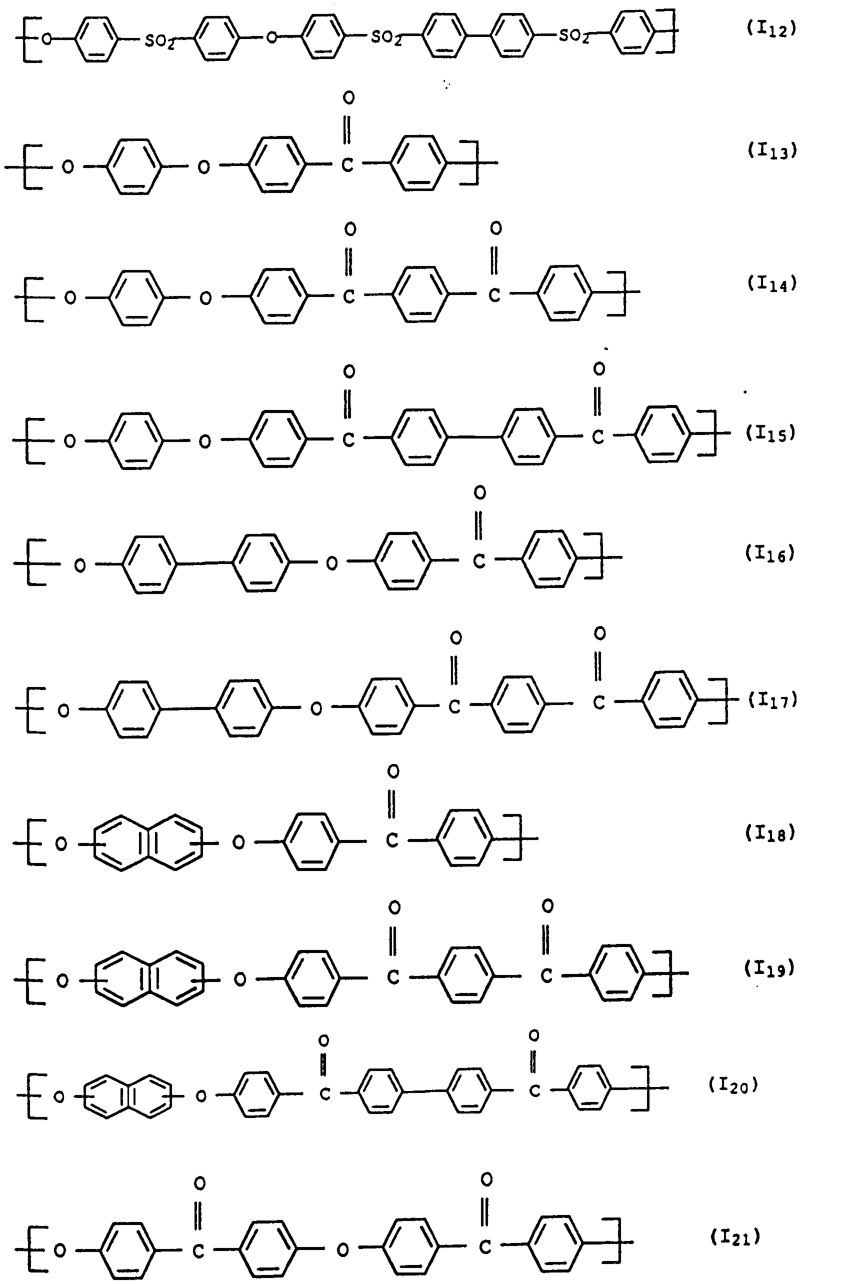

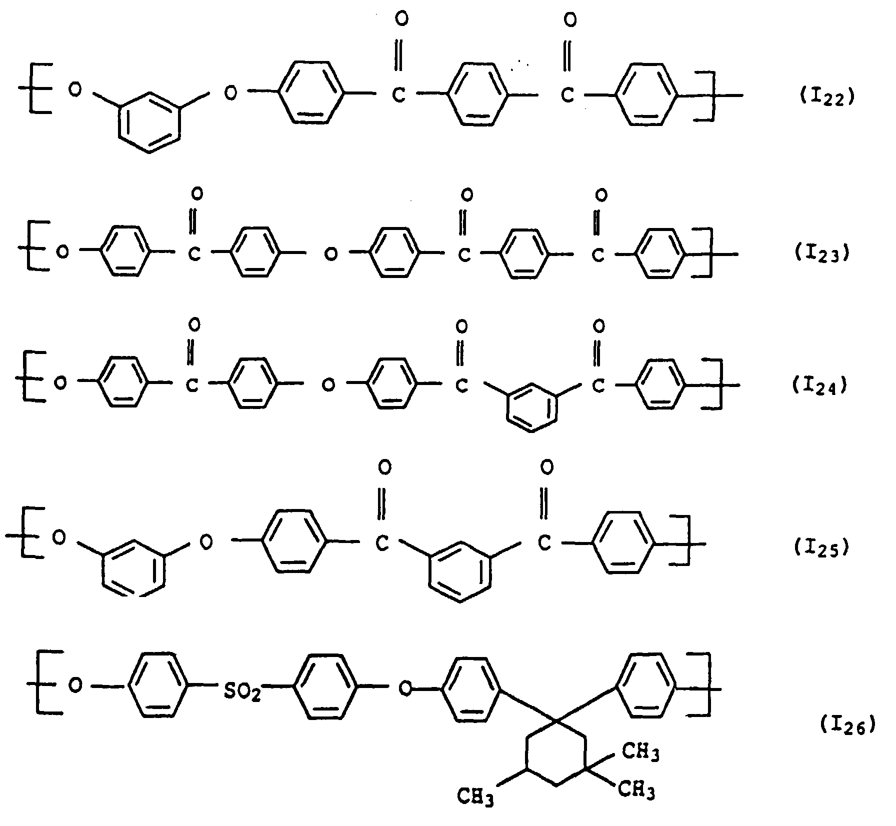

Zu den besonders bevorzugten Polyarylenethern A zählen solche mit
a1) 0 bis 100 Mol-% wiederkehrenden Einheiten der Formel (II): 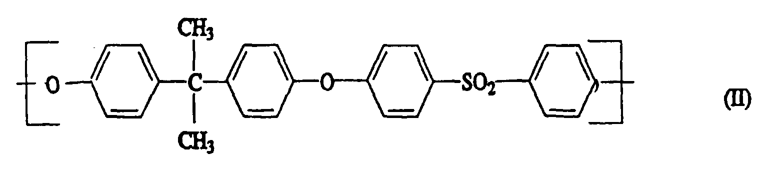 und
a2) 0 bis 100 Mol-% wiederkehrenden Einheiten der Formel (III), 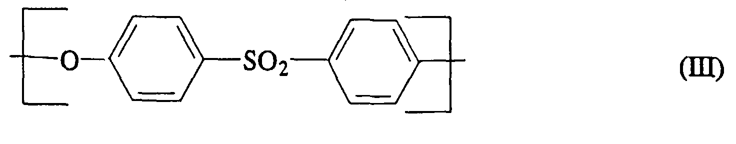
wobei sich die Molprozentangabe auf den Gehalt an SO₂-Gruppen bezieht. Besonders bevorzugt werden die Polyarylenether A mit 3 bis 97 Mol-% wiederkehrenden Einheiten der Formel (II) und 3 bis 97 Mol-% wiederkehrenden Einheiten der Formel (III).

Die Herstellung von Polyarylenethern ist allgemein bekannt (siehe z.B. GB-A-1 152 035; US 4,870,153; WO 84/03891), ebenso die Herstellung von Polyarylenethern mit Blockstruktur (DE-A-37 42 264). Methoden zur Synthese von Copolymeren sind z.B. bei A. Noshay et al., Block Copolymers, Academic Press, New York 1977, beschrieben.

Besonders geeignet ist die Umsetzung von monomeren Dihydroxy- mit Dihalogenverbindungen in aprotischen polaren Lösungsmitteln in Gegenwart von wasserfreiem Alkalicarbonat. Eine besonders bevorzugte Kombination ist N-Methylpyrrolidon als Lösungsmittel und Kaliumcarbonat als Base oder die Umsetzung in der Schmelze. Daneben eignet sich die Umsetzung von Säurechloriden mit aromatischen Verbindungen mit abstrahierbaren Wasserstoffatomen in Gegenwart von Lewissäuren wie Aluminiumtrichlorid.

Polyarylenether A ohne Hydroxyendgruppen können beispielsweise durch geeignete Wahl des molaren Verhältnisses zwischen Dihydroxy- und Dichlormonomeren hergestellt werden (siehe z.B. McGrath et al, Polym. Eng. Sci. 17, 647 (1977); Elias "Makromoleküle", 4. Aufl. (1981), Seiten 490 bis 493, Hütig & Wepf.-Verlag, Basel).

Bevorzugt werden Polyarylenether A verwendet, in denen weniger als 0,03, bevorzugt 0,025 Gew.-%, bezogen auf das Molekulargewicht Mₙ (Zahlenmittelwert) der Polyarylenether, Hydroxygruppen sind.

Die Polyarylenether A können als Endgruppen beispielsweise Halogen-, Methoxy-, Phenoxy-, Benzyloxy- oder Aminoendgruppen enthalten.

### Komponente B

Polyarylensulfide sind die Komponente B der erfindungsgemäßen Formmassen. Ihre Menge beträgt 4 bis 93 Gew.-%. Bevorzugt enthalten die erfindungsgemäßen Formmassen 10 bis 85, insbesondere 10 bis 25 Gew.-% Polyarylensulfide.

Als Komponente C können prinzipiell alle Polyarylensulfide eingesetzt werden. Bevorzugt werden Polyarylensulfide, die mehr als 30 Mol-%, insbesondere mehr als 70 Mol-% wiederkehrende Einheiten 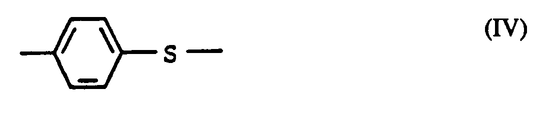 enthalten. Als weitere wiederkehrende Einheiten sind beispielsweise 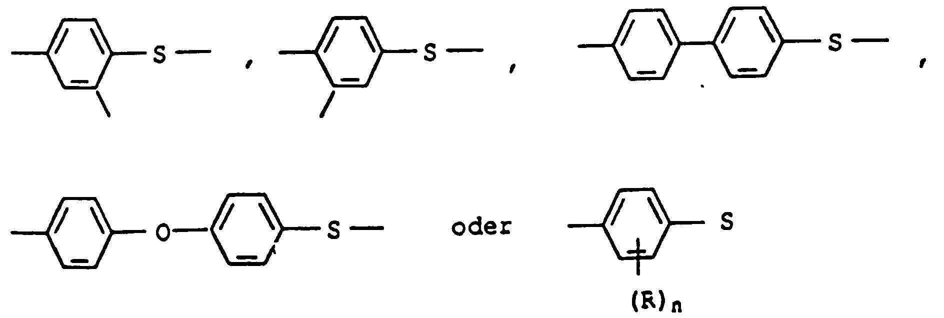 worin R C₁₋₁₀-Alkyl, bevorzugt Methyl und n entweder 1 oder 2 bedeutet, zu nennen. Die Polyarylenethersulfide können sowohl statistische Copolymere als auch Blockcopolymere sein. Ganz besonders bevorzugte Polyphenylensulfide enthalten 100 mol-% Einheiten der allgemeinen Formel (IV).

Als Endgruppen kommen z.B. Halogen, Thiol oder Hydroxy, bevorzugt Halogen in Betracht.

Die Polyarylensulfide können verzweigt oder unverzweigt sein. Die bevorzugten Polyarylensulfide weisen Molgewichte von 1000 bis 1000 000 g/mol auf.

Polyarylensulfide sind an sich bekannt oder nach bekannten Methoden erhältlich. Beispielsweise können sie, wie in der US 2,513,188 beschrieben, durch Umsetzen von Halogenaromaten mit Schwefel oder Metallsulfiden hergestellt werden. Ebenso ist es möglich, Metallsalze von mit Halogen substituierten Thiophenolen zu erhitzen (siehe GB-B 962 941). Zu den bevorzugten Synthesen von Polyarylensulfiden zählt die Umsetzung von Alkalimetallsulfiden mit Halogenaromaten in Lösung, wie sie z.B. aus der US 3,354,129 zu entnehmen ist. Weitere Verfahren sind in US 3,699,087, US 4,645,826 und J.P. Critchley et al., "Heat Resistant Polymers", Seiten 151 bis 160 (1983), Plenum Press, New York, beschrieben.

### Komponente C

Der Anteil der Komponente C, der Carboxygruppen-enthaltenden Polyarylenether, in den erfindungsgemäßen thermoplastischen Formmassen beträgt 1 bis 20, vorzugsweise 1,5 bis 15, insbesondere 2,5 bis 12 Gew.-%.

Komponente C ist wenigstens ein modifizierter, Carboxylgruppen-haltiger Poylarylenether mit wiederkehrenden Strukturelementen der Formel (V) und (VI). 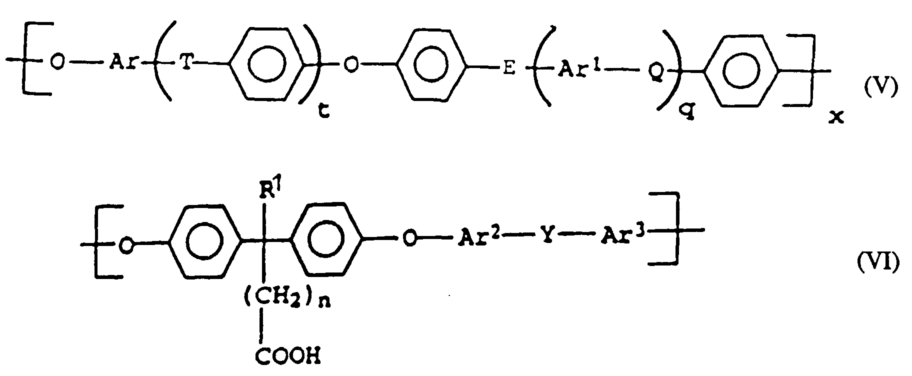 worin
x für 0,5 oder 1 steht,
t und q unabhängig voneinander für 0, 1, 2 oder 3 stehen,
n für eine ganze Zahl von 0 bis 6 steht,
   - Q, T, Y: und E unabhängig voneinander jeweils eine chemische Bindung oder eine Gruppe, ausgewählt unter -O-, -S-, -SO₂-, S=O, C=O, -N=N-, -R^{d}C=CR^{e}- und -CR^{f}R^{g}-,

   bedeuten, wobei
R^{d} und R^{e} unabhängig voneinander jeweils für ein Wasserstoffatom oder C₁₋₁₂-Alkyl stehen und R^{f} und R^{g} unabhängig voneinander jeweils für ein Wasserstoffatom oder C₁₋₁₂-Alkyl, C₁₋₁₂-Alkoxy oder C₆₋₁₈-Aryl stehen, wobei R^{f} und R^{g} gegebenenfalls unabhängig voneinander mit Fluor- und/oder Chloratomen substituiert sind oder gegebenenfalls zusammen mit dem C-Atom, an das sie gebunden sind, eine C₃₋₁₂-Cycloalkylgruppe bilden, die gegebenenfalls mit einer oder mehreren C₁₋₆-Alkylgruppen substituiert ist,
mit der Maßgabe, daß mindestens eine der Gruppen T, Q und E für -SO₂- oder C=O steht und, wenn t und q für 0 stehen, E für -SO₂- oder C=O steht,
   - Ar,: Ar¹, Ar² und Ar³ unabhängig voneinander für C₆₋₁₈-Arylen stehen, wobei diese gegebenenfalls mit C₁₋₁₂-Alkyl, C₆₋₁₈-Aryl, C₁₋₁₂-Alkoxy oder Halogenatomen substituiert sind,
   - R¹: für H, C₁₋₆-Alkyl, oder -(CH₂)ₙ-COOH steht; und
   wobei das molare Verhältnis von Einheiten der Formel (V) zu Einheiten der Formel (VI) im Bereich von 0,05:99,95 bis 99,95:0,05 liegt.

Erfindungsgemäß bevorzugt sind solche modifizierten Polyarylenether (Komponente C), die einen Anteil an freie Säuregruppen enthaltenden Einheiten der Formel (VI) von etwa 0,05 bis etwa 25 Mol-%, bestimmt durch ¹H-NMR, aufweisen.

Weiterhin bevorzugt sind modifizierte Polyarylenether (Komponente C), welche Strukturelemente der Formel VI umfassen, worin Ar² und Ar³ jeweils für 1,4-Phenylen stehen, Y für SO₂, R¹ für C₁₋₆-Alkyl und n für eine ganze Zahl von 1 bis 6 steht.

Erfindungsgemäß verwendbare Alkylreste umfassen geradkettige oder verzweigte, gesättigte Kohlenstoffketten mit bis zu 12 Kohlenstoffatomen. Beispielsweise können folgende Reste genannt werden: C₁₋₆-Alkylreste, wie Methyl, Ethyl, n-Propyl, i-Propyl, n-Butyl, sec. -Butyl, 2- oder 3-Methylpentyl; und längerkettige Reste, wie unverzweigtes Heptyl, Octyl, Nonyl, Decyl, Undecyl, Lauryl und die ein- oder mehrfach verzweigten Analoga davon.

Der Alkylteil von erfindungsgemäß brauchbaren Alkoxygruppen ist wie oben angegeben definiert.

Erfindungsgemäß verwendbare Cycloalkylreste umfasssen insbesondere C₃₋₁₂-Cycloalkylreste, wie Cyclopropyl, Cyclobutyl, Cyclopentyl, Cyclohexyl, Cycloheptyl, Cyclooctyl, Cyclopropylmethyl, Cyclopropylethyl, Cyclopropylpropyl, Cyclobutylmethyl, Cyclobutylethyl, Cyclopentylethyl, -propyl, -butyl, -pentyl, -hexyl, Cyclohexylmethyl, -dimethyl, -trimethyl und dergleichen.

Beispiele für erfindungsgemäß brauchbare C₆₋₁₈-Arylengruppen sind Phenylengruppen, wie 1,2-, 1,3- und 1,4-Phenylen, Naphthylengruppen, wie 1,6-, 1,7-, 2,6- und 2,7-Naphthylen, sowie die von Anthracen, Phenanthren und Naphthacen abgeleiteten Brückengruppen.

Die in den erfindungsgemäßen Formmassen als Verträglichkeitsvermittler verwendeten, seitenständig carboxylierten Polyarylenether (Komponente C), umfassend die Strukturelemente der Formeln (V) und (VI), sind an sich bekannte Verbindungen oder nach bekannten Verfahren herstellbar.

Beispielsweise sind die erfindungsgemäß modifizierten Polyarylenether zugänglich in Anlehnung an die EP-A-0 185 237 sowie nach den von I.W. Parsons et al., in Polymer, 34, 2836 (1993) und T. Koch, H. Ritter, in Macromol. Phys. 195, 1709 (1994) beschriebenen Verfahren.

Die Polyarylenether sind demnach beispielsweise erhältlich durch Polykondensation von Verbindungen der allgemeinen Formel (VII) 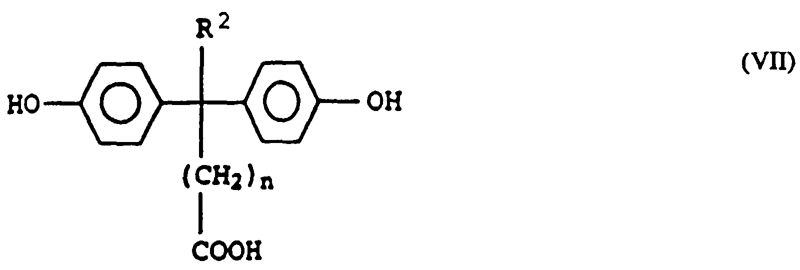 worin R² und n die oben angegebenen Bedeutungen besitzen, mit wenigstens einer weiteren, z.B. chlorfunktionalisierten aromatischen Verbindung, wie Bis-(4-chlorphenyl)sulfon, und gegebenenfalls weiteren hydroxyfunktionalisierten Verbindungen, wie Bisphenol A und/oder Bisphenol S. Geeignete Reaktionspartner sind dem Fachmann bekannt.

Beispiele für geeignete Strukturelemente der allgemeinen Formel (VI) sind: 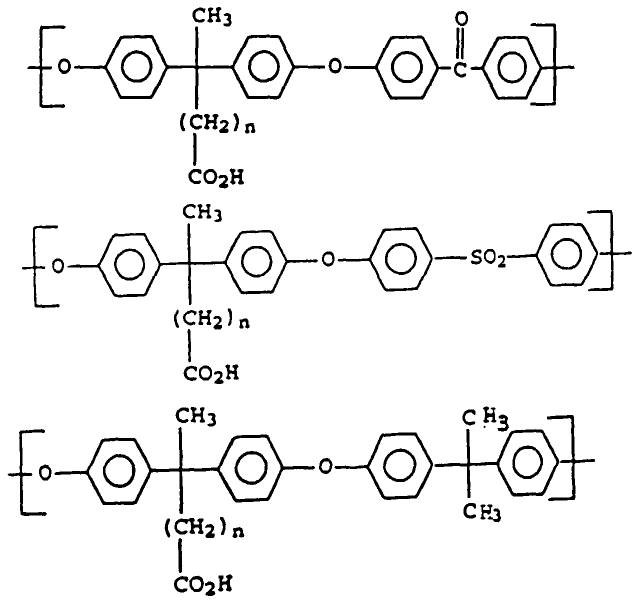 worin n jeweils für eine ganze Zahl von 0 bis 6 steht.

Die erfindungsgemäß verwendeten säuregruppenhaltigen Polyarylenether C weisen Viskositätszahlen von etwa 15 bis 80 ml/g auf (bestimmt in 1%iger NMP-Lösung bei 25°C). Der Anteil freier Säuregruppen in der Komponente C beträgt 0,05 bis 25, vorzugsweise 0,1 bis 20 und insbesondere 0,1 bis 15 Mol-%, wobei die Bestimmung des Anteils an Säuregruppen, wie bei I.W. Parsons et al., Polymer, 34, 2836 (1993) beschrieben, durch ¹H-NMR erfolgt.

Es können verschiedene Einheiten der Formel (V) statistisch oder in Blöcken verteilt im Polyarylenether vorliegen.

Die Herstellung erfindungsgemäß brauchbarer Poylarylenether C kann beispielsweise in Anlehnung an GB-A-1 152 035 und US 4,870,153 erfolgen. Geeignete Verfahrensbedingungen zur Synthese von Polyarylenethern sind beispielsweise in EP-A-0 113 112 und EP-A-0 135 130 beschrieben. Besonders geeignet ist wie bei der Herstellung der Komponente A die Umsetzung der Monomeren in aprotischen polaren Lösungsmitteln in Gegenwart von wasserfreiem Alkalicarbonat. Eine besonders bevorzugte Kombination ist N-Methylpyrrolidon als Lösungsmittel und Kaliumcarbonat als Katalysator. Die Umsetzung in der Schmelze ist ebenfalls bevorzugt. Die darin beschriebene Einführung von terminalen Anhydridgruppen ist für die vorliegende Erfindung jedoch nicht zwingend erforderlich. Beispiele für geeignete Polyarylenether C sind solche mit mindestens einer der folgenden wiederkehrenden Struktureinheiten I₂₇ oder I₂₈ 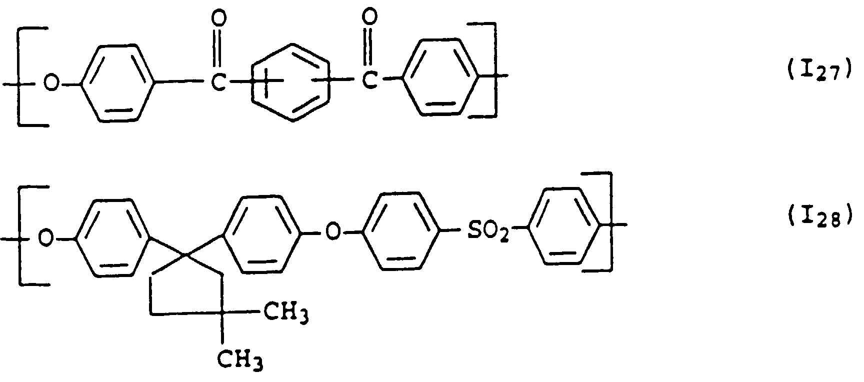 oder den Struktureinheiten der Formeln I₁ bis I₋₂₆ II und III, die bei Komponente A beschrieben sind.

Als besonders bevorzugte Einheiten der Formel I sind zu nennen Einheiten der Formeln II und III, welche einzeln oder im Gemisch vorliegen können.

### Komponente D

Der Anteil der Komponente D schlagzähmodifizierender Kautschuk, der gegenüber Carboxylgruppen reaktionsfähige funktionelle Gruppen aufweist, beträgt an den erfindungsgemäßen Formmassen 1 bis 20, vorzugsweise 1,5 bis 15, insbesondere 2,5 bis 7 Gew.-%.

Vorzugsweise weist der Kautschuk Epoxy- und/oder Oxazolingruppen auf.

Bevorzugte funktionalisierte Polyolefinkautschuke sind aus folgenden Komponenten aufgebaut:
d1) 40 bis 99 Gew.-% mindestens eines α-Olefins mit 2 bis 8 C-Atomen;
d2) 0 bis 50 Gew.-% eines Diens;
d3) 0 bis 45 Gew.-% eines C₁₋₁₂-Alkylesters der Acrylsäure oder Methacrylsäure oder Mischungen derartiger Ester;
d4) 0 bis 40 Gew.-% einer ethylenisch ungesättigten C₂₋₂₀-Mono- oder Dicarbonsäure oder eines funktionellen Derivats einer solchen Säure;
d5) 1 bis 40 Gew.-% eines Epoxygruppen enthaltenden Monomeren;
d6) 0 bis 5 Gew.-% sonstiger radikalisch polymerisierbarer Monomerer.

Als Beispiele für geeignete α-Olefine d1) können Ethylen, Propylen, 1-Butylen, 1-Pentylen, 1-Hexylen, 1-Heptylen, 1-Octylen, 2-Methylpropylen, 3-Methyl-1-butylen und 3-Ethyl-1-butylen genannt werden, wobei Ethylen und Propylen bevorzugt werden.

Als geeignete Dien-Monomere d2) seien beispielsweise konjugierte Diene mit 4 bis 8 C-Atomen, wie Isopren und Butadien, nicht-konjugierte Diene mit 5 bis 25 C-Atomen, wie Penta-1,4-dien, Hexa-1,4-dien, Hexa-1,5-dien, 2,5-Dimethylhexa-1,5-dien und Octa-1,4-dien, Cyclische Diene wie Cyclopentadien, Cyclohexadiene, Cyclooctadiene und Dicyclopentadien, sowie Alkenylnorbornene, wie 5-Ethyliden-2-norbornen, 5-Butyliden-2-norbornen, 2-Methallyl-5-norbornen, 2-Isopropenyl-5-norbomen und Tricyclodiene, wie 3-Methyltricyclo-(5.2.1.0.^{2.6})-3,8-decadien, 5-Ethyliden-norbornen und Dicyclopentadien. Der Diengehalt beträgt vorzugsweise 0,5 bis 50, insbesondere 2 bis 20 und besonders bevorzugt 3 bis 15 Gew.-%, bezogen auf das Gesamtgewicht des Olefinpolymerisats.

Beispiele für geeignete Ester d3) sind Methyl-, Ethyl-, Propyl-. n-Butyl, i-Butyl und 2-Ethylhexyl-, Octyl- und Decylacrylate bzw. die entsprechenden Ester der Methacrylsäure. Von diesen werden Methyl-, Ethyl-, Propyl-, n-Butyl- und 2-Ethylhexylacrylat bzw. -methacrylat besonders bevorzugt.

Anstelle der Ester d3) oder zusätzlich zu diesen können in den Olefinpolymerisaten auch säurefunktionelle und/oder latent säurefunktionelle Monomere ethylenisch ungesättigter Mono- oder Dicarbonsäuren d4) enthalten sein.

Als Beispiele für Monomere d4) seien Acrylsäure, Methacrylsäure, tertiäre Alkylester dieser Säuren, insbesondere tert.-Butylacrylat und Dicarbonsäuren, wie Maleinsäure und Fumarsäure, oder Derivate dieser Säuren sowie deren Monoester genannt.

Als latent säurefunktionelle Monomere sollen solche Verbindungen verstanden werden, die unter den Polymerisationsbedingungen bzw. bei der Einarbeitung der Olefinpolymerisate in die Formmassen freie Säuregruppen bilden. Als Beispiele hierfür seien Anhydride von Dicarbonsäuren mit 2 bis 20 C-Atomen, insbesondere Maleinsäureanhydrid und teriäre C₁₋₁₂-Alkylester der vorstehend genannten Säuren, insbesondere tert.-Butylacrylat und tert.-Butylmethacrylat angeführt.

Ethylenisch ungesättigte Dicarbonsäuren und Anhydride d4) sind darstellbar durch folgende allgemeine Formeln (VIII) und (IX):

R¹⁰C(COOR³)=C(COOR⁴)R⁵ (VIII)

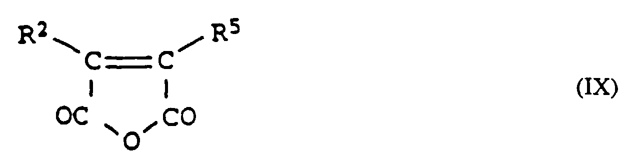

worin R¹⁰, R³, R⁴ und R⁵ unabhängig voneinander für H oder C₁₋₆-Alkyl stehen.

Epoxygruppen tragende Monomere d5) sind darstellbar durch folgende allgemeine Formeln (X) und (XI). 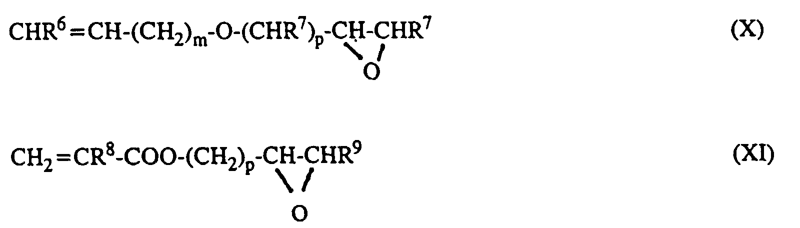 worin R⁶, R⁷, R⁸, R⁹ und unabhängig voneinander für H oder C₁₋₆-Alkyl stehen, m eine ganze Zahl von 0 bis 20 und p eine ganze Zahl von 0 bis 10 ist.

Bevorzugt stehen R³ bis R¹⁰ für Wasserstoff, m für den Wert 0 oder 1 und p für den Wert 1.

Bevorzugte Verbindungen d4) bzw. d5) sind Maleinsäure, Fumarsäure und Maleinsäureanhydrid bzw. Alkenylglycidylether und Vinylglycidylether.

Besonders bevorzugte Verbindungen der Formeln (VIII) und (IX) bzw. (X) und XI sind Maleinsäure und Maleinsäureanhydrid bzw. Epoxygruppen enthaltende Ester der Acrylsäure und/oder Methacrylsäure, insbesondere Glycidylacrylat und Glycidylmethacrylat.

Besonders bevorzugt sind Olefinpolymerisate aus
- 50 bis 98,9,: insbesondere 60 bis 94,85 Gew.-% Ethylen,
- 1 bis 50,0,: insbesondere 5 bis 40 Gew.-% eines Esters der Acryl- oder Methacrylsäure, und
- 0,1 bis 20,0,: insbesondere 0,15 bis 15 Gew.-% Glycidylacrylat und/oder Glycidylmethacrylat, Acrylsäure und/oder Maleinsäureanhydrid.

Besonders geeignete funktionalisierte Kautschuke D sind
Ethylen-Methylmethacrylat-Glycidylmethacrylat-,
Ethylen-Methylacrylat-Glycidylmethacrylat-
Ethylen-Methylacrylat-Glycidylacrylat- und
Ethylen-Methylmethacrylat-Glycidylacrylat-Polymere.

Als sonstige Monomere d6) kommen z.B. Vinylester und Vinylether in Betracht.

Die Herstellung der vorstehend beschriebenen Polymere kann nach an sich bekannten Verfahren erfolgen, vorzugsweise durch statistische Copolymersation unter hohem Druck und erhöhter Temperatur.

Die Herstellung eines Oxazingruppen enthaltenden Kautschuks kann durch Umsetzen eines Nitrilgruppen enthaltenden Polymeren (T) mit einem Monoaminoalkohol in Gegenwart eines Katalysators gefunden werden, wobei man das Polymere T in der Schmelze mit dem Monoaminoalkohol in Gegenwart eines Katalysators in Abwesenheit eines Lösungsmittels umsetzt.

Als Nitrilgruppen enthaltende Polymere T kommen prinzipiell alle Nitrilgruppen enthaltenden Polymere in Betracht, die schmelzbar sind.

Bevorzugte Polymere T enthalten im allgemeinen von 0,5 bis 80, bevorzugt von 0,7 bis 70 Gew.-%, bezogen auf das Gesamtgewicht aller Einheiten, Einheiten, die sich von Acrylnitril oder Alkylacrylnitril ableiten, worunter Acrylnitril oder C₁₋₁₀-Alkylacrylnitril, insbesondere C₁₋₃-Alkylacrylnitril bevorzugt sind. Ganz besonders bevorzugt enthalten die Polymeren T Einheiten, die sich von Acrylnitril oder Methacrylnitril ableiten.

Neben diesen Einheiten enthalten die bevorzugten Polymeren T von 20 bis 99,5, bevorzugt von 30 bis 99,3 Gew.-%, bezogen auf das Gesamtgewicht aller Einheiten, Einheiten, die sich von vinylaromatischen Verbindungen, Vinylestern, Acrylsäureestern oder weiteren copolymerisierbaren Monomeren ableiten.

Ein entsprechendes Verfahren ist in der DE-A-196 06 198 mit dem Titel "Verfahren zur Herstellung von Oxazingruppen enthaltenden Polymeren" beschrieben.

Der Schmelzindex der Epoxy-modifizierten Kautschuke liegt im allgemeinen im Bereich von 1 bis 80 g/10 min (gemessen bei 190°C und 2,16 kg Belastung).

### Komponente E

Als Komponente E können die erfindungsgemäßen Formmassen bis zu 50 Gew.-%, vorzugsweise bis zu 40 Gew.-%, bezogen auf das Gesamtgewicht der Komponenten A bis E, an weiteren Zusatzstoffen enthalten.

Vorzugsweise enthalten die erfindungsgemäßen Formmassen bis zu 50 Gew.-%, besonders bevorzugt 0,05 bis 45 Gew.-% faser- oder teilchenförmige Füllstoffe oder deren Gemische. Dabei handelt es sich vorzugsweise um kommerziell erhältliche Produkte. Verarbeitungshilfsmittel und Stabilisatoren wie UV-Stabilisatoren, Schmiermittel, Phosphorstabilisatoren und Antistatika werden üblicherweise in Mengen von 0,01 bis 5 Gew.-% verwendet, Verstärkungsmittel wie Kohlenstoffasern und Glasfasern hingegen in Mengen von 5 bis 40 Gew.-%. Besonders bevorzugt als Komponente G sind Kohlenstoffasern und insbesondere Glasfasern. Die verwendeten Glasfasern können E-, A- oder C-Glas ein und sind vorzugsweise mit einer Schlichte und einem Haftvermittler ausgerüstet. Ihr Durchmesser liegt im allgemeinen zwischen 6 und 20 µm. Es können sowohl Endlosfasern (rovings) als auch Schnittglasfasern mit einer Länge von 1 bis 10 mm, vorzugsweise 3 bis 6 mm, eingesetzt werden. Weiterhin können Füll- oder Verstärkungsstoffe, wie Glaskugeln, Mineralfasern, Whisker, Aluminiumoxidfasern, Glimmer, Quarzmehl und Wollastonit zugesetzt werden. Außerdem seien Metallflocken (z.B. Aluminiumflocken der Transmet Corp.), Metallpulver, Metallfasern, metallbeschichtete Füllstoffe (z.B. nickelbeschichtete Glasfasern) sowie andere Zuschlagsstoffe, die elektromagnetische Wellen abschirmen, genannt. Insbesondere kommen Al-Flocken (K 102 der Transmet) für EMI-Zwecke (electro-magnetic interference) in Betracht; ferner Abmischen dieser Masse mit zusätzlichen Kohlenstoffasern, Leitfähigkeitsruß oder nickelbeschichteten C-Fasern. Die erfindungsgemäßen Formmassen können ferner Zusatzstoffe enthalten, die für Polyarylenether, Polyarylensulfid und Kautschuke typisch und gebräuchlich sind. Als solche Zusatzstoffe seien beispielsweise genannt: Farbstoffe, Pigmente, Antistatika und Antioxidanien.

### Herstellung der Formmassen

Die erfindungsgemäßen Formmassen werden durch Mischen der Komponenten A bis D und gegebenenfalls E hergestellt.

Die Reihenfolge, in der die Komponenten A bis E gemischt werden, ist beliebig.

Die erfindungsgemäßen Formmassen können nach an sich bekannten Verfahren, beispielsweise Extrusion, hergestellt werden. Die erfindungsgemäßen Formmassen können z.B. hergestellt werden, indem man die Ausgangskomponenten in üblichen Mischvorrichtungen wie Schneckenextrudern, vorzugsweise Zweischneckenextrudern, Brabender-Mischer oder Banburry-Mischer sowie Knetern mischt und anschließend extrudiert. Nach der Extrusion wird das Extrudat abgekühlt und zerkleinert. Die Reihenfolge der Mischung der Komponenten kann variiert werden, so können zwei oder ggf. drei Komponenten vorgemischt werden, es können aber auch alle Komponenten gemeinsam gemischt werden.

Um eine möglichst homogene Durchmischung zu erhalten, ist eine intensive Durchmischung vorteilhaft. Dazu sind im allgemeinen mittlere Mischzeiten von 0,2 bis 30 Minuten bei Temperaturen von 280 bis 400°C, bevorzugt 290 bis 390°C, erforderlich. Nach der Extrusion wird das Extrudat in der Regel abgekühlt und zerkleinert.

Die erfindungsgemäßen thermoplastischen Formmassen können nach den bekannten Verfahren der Thermoplastverarbeitung bearbeitet werden, also z.B. durch Extrudieren, Spritzgießen, Kalandrieren, Hohlkörperblasen, Pressen oder Sintern.

Die erfindungsgemäßen Formmassen und Formkörper, Fasern und Folien daraus zeichnen sich durch sehr gute Chemikalienbeständigkeit, sehr gute Kerbschlagzähigkeit und erhöhte Kriechstromfestigkeit aus. Die Formmassen besitzen zudem eine gute Fließfähigkeit.

Die Erfindung wird durch die nachstehenden Beispiele näher erläutert.

### Beispiele

Die Viskositätszahl der Produkte wird in 1%-iger Lösung von N-Methylpyrrolidon (NMP) bei 25°C bestimmt. Der Anteil der Einheiten mit Säuregruppen in den Copolyarylethern C) wurde wie bei I.W. Parsons et al., Polymer 34, 2836 (1993) beschrieben, durch ¹H-NMR-Spektroskopie ermittelt.

### Komponente A1

Als Polyarylether A1 wurde Ultrason® S 2010 (Handelsprodukt der BASF AG) verwendet. Dieses Produkt ist charakterisiert durch eine Viskositätszahl von 56 ml/g, gemessen in 1%-iger NMP-Lösung bei 25°C.

### Komponente A2

Als Polyarylether A2 wurde Ultrason® E 1010 (Handelsprodukt der BASF AG) verwendet. Dieses Produkt ist charakterisiert durch eine Viskositätszahl von 49 ml/g, gemessen in 1%-iger NMP-Lösung bei 25°C.

### Komponente B

Polyphenylsulfid, E-Modul=3200 N/mm²; z.B. Handelsprodukt Fortron® 0214 von Hoechst.

### Komponente C1

Unter Stickstoffatmosphäre wurden 5,742 kg Dichlordiphenylsulfon, 4,374 kg Bisphenol A und 112 g 4,4'-Di-hydroxyvaleriansäure in 29 kg N-Methylpyrrolidon gelöst und mit 2,820 kg wasserfreiem Kaliumcarbonat versetzt.

Die Reaktionsmischung wurde bei einem Druck von 300 mbar unter ständigem Abdestillieren des Reaktionswassers und N-Methylpyrrolidon zunächst 1 h auf 180°C erhitzt und dann 6 h bei 190°C weiter umgesetzt.

Nach Zugabe von 40 kg N-Methylpyrrolidon wurden die anorganischen Bestandteile abfiltriert. Durch Zugabe von 50 ml Eisessig wurden basische Gruppen neutralisiert, anschließend wurde das Polymer durch Fällung in Wasser isoliert. Nach 3-maliger Extraktion mit Wasser wurde das Produkt bei 240°C unter vermindertem Druck getrocknet. Es wurde ein weißes Pulver erhalten.

Der Anteil an Einheiten mit Säuregruppen wurde mittels H-NMR zu 1,2 mol-% bestimmt, die Viskositätszahl des Produkts betrug 38,1 ml/g.

### Komponente C2

Unter Stickstoffatmosphäre wurden 5,742 kg Dichlordiphenylsulfon, 4,240 kg Bisphenol A und 280 kg 4,4'-Di-hydroxyvaleriansäure in 29 kg N-Methylpyrrolidon gelöst und mit 2,820 kg wasserfreiem Kaliumcarbonat versetzt.

Die Reaktkionsmischung wurde bei einem Druck von 300 mbar unter ständigem Abdestillieren des Reaktionswassers und N-Methylpyrrolidon zunächst 1 h auf 180°C erhitzt und dann 6 h bei 190°C weiter umgesetzt.

Nach Zugabe von 40 kg N-Methylpyrrolidon wurden die anorganischen Bestandteile abfiltriert. Durch Zugabe von 150 ml Eisessig wurden basische Gruppen neutralisiert, anschließend wurde das Polymer durch Fällung in Wasser isoliert. Nach 3-maliger Extraktion mit Wasser wurde das Produkt bei 140°C unter vermindertem Druck getrocknet. Es wurde ein weißes Pulver erhalten.

Der Anteil an Einheiten mit Säuregruppen wurde mittels H-NMR zu 3,1 mol-% bestimmt, die Viskositätszahl des Produkts betrug 37,1 ml/g.

### Komponente C3

Unter Stickstoffatmosphäre wurden 5,742 kg Dichlordiphenylsulfon, 5,076 kg Dihydroxydiphenylsulfon und 305,8 g 4,4'-Dihydroxyvaleriansäure in 29 kg N-Methylpyrrolidon gelöst und mit 2,820 kg wasserfreiem Kaliumcarbonat versetzt.

Die Reaktionsmischung wurde bei einem Druck von 300 mbar unter ständigem Abdestillieren des Reaktionswassers und N-Methylpyrrolidon zunächst 1 h auf 180°C erhitzt und dann 6 h bei 190°C weiter umgesetzt.

Nach Zugabe von 40 kg N-Methylpyrrolidon wurden die anorganischen Bestandteile abfiltiert. Durch Zugabe von 300 ml Eisessig wurden basische Gruppen neutralisiert, anschließend wurde das Polymer durch Fällung in Wasser isoliert. Nach 3-maliger Extraktion mit Wasser wurde das Produkt bei 140°C unter vermindertem Druck getrocknet. Es wurde ein weißes Pulver erhalten.

Der Anteil an Einheiten mit Säuregruppen wurde mittels H-HMR zu 3,0 mol-% bestimmt, die Viskositätszahl des Produkts betrug 40,2 ml/g.

### Komponente D

Ethylen-Methylmethacrylat-Glycidylmethacrylat-Polymer mit 25 Gew.-% MMA und 8 Gew.-% GMA, charakterisiert durch einen Schmelzindex (190°C, 2,16 kg) von 6 g/10min, z.B. Lotader AX 8900 der Firma Elf-Atochem.

### Herstellung und Prüfung der Formmassen

Die Komponenten wurden in einem Zweiwellenextruder bei einer Massetemperatur von 300 bis 350°C gemischt. Die Schmelze wurde durch ein Wasserbad geleitet und granuliert.

Die Polysulfon enthaltenden Formmassen wurden bei einer Massetemperatur von 310°C verarbeitet, während die Polyethersulfon enthaltenden Formmassen bei 350°C verarbeitet wurden. Die Formtemperatur war jeweils 100°C.

Die Wärmeformbeständigkeit der Proben wurde mittels der Vicat-Erweichungstemperatur ermittelt. Die Vicat-Erweichungstemperatur wurde nach DIN 53 460 mit einer Kraft von 49,05 N und einer Temperatursteigerung von 50 K je Stunde an Normkleinstäben ermittelt.

Die Kerbschlagzähigkeit der Produkte wurde an ISO-Stäben nach ISO 179 leA bestimmt. Zur Charakterisierung der Fließfähigkeiten der Produkte wurden die MVI-Werte nach DIN 53 735 bei 300 bzw. 320°C und 21,6 kg Belastung ermittelt.

Die Schädigungsarbeit wurde bei unverstärkten Proben an Rundscheiben nach DIN 53 443 ermittelt.

Die Chemikalienbeständigkeit der Produkte wurde durch einstündige Lagerung von Formkörpern in N-Methylpyrrolidon charakterisiert. Dabei wurde die eintretende Gewichtsabnahme des Formkörpers als Maß für die Chemikalienresistenz ermittelt. Die Kriechstromfestigkeit wurde nach IEC 112 bestimmt.

Die Zusammensetzungen der Formmassen und Vergleichsformmassen V1 bis V4 und die Ergebnisse der Prüfungen sind in der Tabelle 1 aufgeführt.

**Tabelle 1**

| **Beispiel** | **V1** | **V2** | **1** | **V3** | **2** | **V4** | **3** |
|---|---|---|---|---|---|---|---|
| Komponente [Gew.-%] | | | | | | | |
| A1 | 80 | 70 | 66 | 76 | 71 | - | - |
| A2 | - | - | - | - | - | 76 | 71 |
| B | 20 | 20 | 19 | 19 | 19 | 19 | 19 |
| C1 | - | 10 | 10 | - | - | - | |
| C2 | - | - | - | - | 5 | _ | - |
| C3 | - | - | - | - | - | - | 5 |
| D | - | - | 5 | 5 | 5 | 5 | 5 |
| Vicat B [°C] | 184 | 184 | 182 | 182 | 182 | 219 | 218 |
| aₖ[kJ/m²] | 3,5 | 3,4 | 29,0 | 4,3 | 43 | 2,7 | 31 |
| W_{S} [Nm] | 12 | 43 | 53 | 12 | 51 | 4 | 52 |
| MVI [rnl/10'] | 100 | 109 | 98 | 90 | 89 | 95 | 99 |
| Masseverlust in NMP [%] | 10,2 | 4,5 | 4,0 | 7,6 | 3,1 | 6,8 | 4,8 |
| CTI | 175 | 175 | 225 | 200 | 225 | 175 | 200 |
| MVI: V4, 3: Meßtemperatur 320°C, sonst 300°C VI bis V4: Vergleichsversuche | | | | | | | |

## Patentansprüche

1. Thermoplastische Formmasse, enthaltend, bezogen auf das Gesamtgewicht der Komponenten A bis D und gegebenenfalls E, das insgesamt 100 Gew.-% ergibt,
a: 5 bis 94 Gew.-% mindestens eines Polyarylenethers als Komponente A,
b: 4 bis 93 Gew.-% mindestens eines Polyarylensulfids als Komponente B,
c: 1 bis 20 Gew.-% mindestens eines Carboxylgruppen enthaltenden Polyarylenethers als Komponente C,
d: 1 bis 20 Gew.-% mindestens eines schlagzähmodifizierenden Kautschuks, der gegenüber Carboxylgruppen reaktionsfähige funktionelle Gruppen aufweist, als Komponente D,
e: 0 bis 50 Gew.-% weiterer Zusatzstoffe als Komponente E.

2. Formmasse nach Anspruch 1, dadurch gekennzeichnet, daß die Polyarylenether der Komponente A und/oder C wiederkehrende Einheiten der allgemeinen Formel (I) 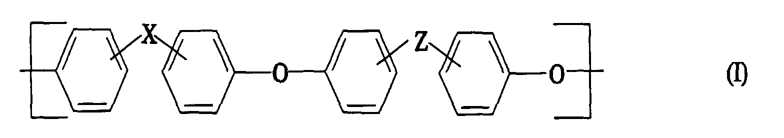 oder entsprechende mit C₁₋₆-Alkyl, C₁₋₆-Alkoxy, Aryl, Chlor oder Fluor kernsubstituierte Einheiten, wobei
X -SO₂-, -SO-, -O-, CO, -N=N-, -RC=CR^{a}-, -CR^{b}R^{c}- oder eine chemische Bindung sein kann und
Z ausgewählt ist aus
-SO₂-, -SO-, CO,
-N=N- und -RC=CR^{a}-, wobei
R und R^{a} jeweils Wasserstoff oder C₁₋₆-Alkyl darstellen,
R^{b} und R^{c} jeweils Wasserstoff oder C₁₋₆-Alkyl, C₄₋₁₀-Cycloalkyl, C₁₋₆-Alkoxy oder Aryl oder jeweils deren Fluor- oder Chlorderivate sein können,
enthalten.

3. Formmasse nach Anspruch 1 oder 2, dadurch gekennzeichnet, daß die Polyarylenether der Komponente A
a1) 0 bis 100 Mol-% wiederkehrende Einheiten der Formel (II) 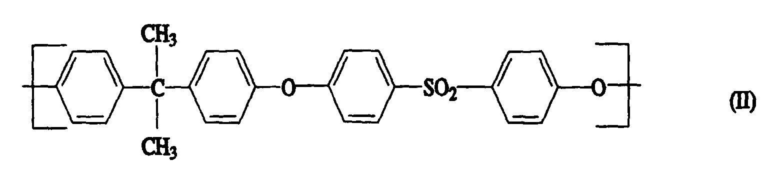
a2) 0 bis 100 Mol-% wiederkehrende Einheiten der Formel (III) 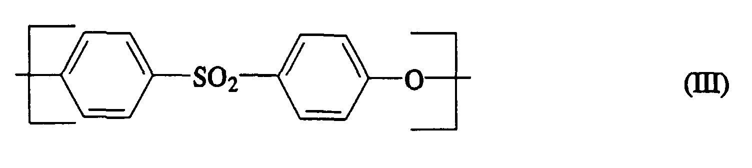
enthalten.

4. Formmasse nach einem der Ansprüche 1 bis 3, in der die Polyarylensulfide der Komponente B wiederkehrende Einheiten der Formel (IV)
(IV)
enthalten.

5. Thermoplastische Formmasse nach einem der Ansprüche 1 bis 4, dadurch gekennzeichnet, daß der Carboxylgruppen enthaltende Polyarylenether der Komponente C wiederkehrende Strukturelemente der allgemeinen Formeln V und VI 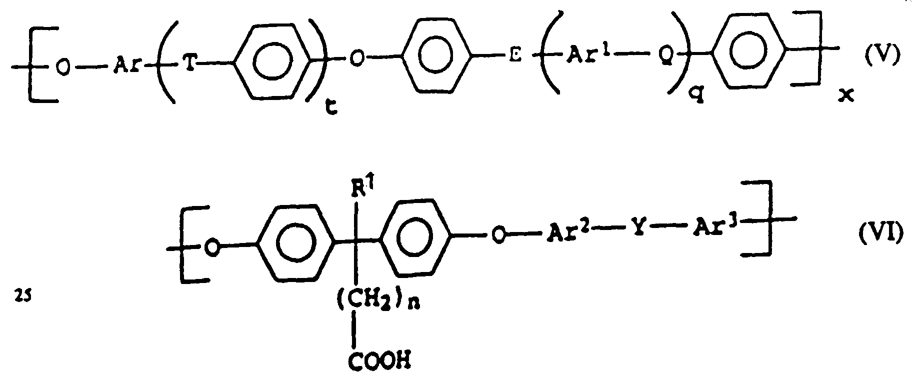 umfaßt,
worin
x für 0,5 oder 1 steht,
t und q unabhängig voneinander für 0, 1, 2 oder 3 stehen,
n für eine ganze Zahl von 0 bis 6 steht,
Q, T, Y und E unabhängig voneinander jeweils eine chemische Bindung oder eine Gruppe, ausgewählt unter -O-, -S-, -SO₂-, S=O, C=O, -N=N-, -R^{d}C=CR^{e}- und -CR^{f}R^{g}-, bedeuten,
wobei
R^{d} und R^{e} unabhängig voneinander jeweils für ein Wasserstoffatom oder C₁₋₁₂-Alkyl, C₁₋₁₂-Alkoxy oder C₆₋₁₈-Aryl stehen, wobei R^{f} und R^{g} gegebenenfalls unabhängig voneinander mit Fluor- und/oder Chloratomen substituiert sind oder gegebenenfalls zusammen mit dem C-Atom, an das sie gebunden sind, eine C₃₋₁₂-Cycloalkylgruppe bilden, die gegebenenfalls mit einer oder mehreren C₁₋₆-Alkylgruppen substituiert ist, mit der Maßgabe, daß mindestens eine der Gruppen T, Q und E für -SO₂- oder C=O steht und, wenn t und q für 0 stehen, E für -SO₂- oder C=O steht,
Ar, Ar¹, Ar² und Ar³ unabhängig voneinander für C₆₋₁₈-Arylen stehen, wobei diese gegebenenfalls mit C₁₋₁₂-Alkyl, C₆₋₁₈-Aryl, C₁₋₁₂-Alkoxy oder Halogenatomen substituiert sind,
R¹ für H, C₁₋₆-Alkyl, oder -(CH₂)ₙ-COOH steht; und
wobei das molare Verhältnis von Einheiten der Formel V zu Einheiten der Formel VI im Bereich von 0,05:99,95 bis 99,95:0,05 liegt.

6. Formmasse nach einem der Ansprüche 1 bis 5, dadurch gekennzeichnet, daß der schlagzähmodifizierende Kautschuk der Komponente D Epoxy- und/oder Oxazolingruppen aufweist.

7. Verfahren zur Herstellung von Formmassen nach einem der Ansprüche 1 bis 6 durch Mischen der Komponenten A bis D und gegebenenfalls E.

8. Verwendung von Formmassen nach einem der Ansprüche 1 bis 6 zur Herstellung von Fasern, Folien oder Formkörpern.

9. Fasern, Folien oder Formkörper aus einer Formmasse nach einem der Ansprüche 1 bis 6.

10. Verfahren zur Herstellung von Fasern, Folien oder Formkörpern nach Anspruch 9 durch Extrudieren, Extrusionsblasen oder Spritzgießen.
